# EUROPEAN PATENT APPLICATION

(11) **EP 4 364 560 A1**
(43) Date of publication of application: **08.05.2024**
(21) Application number: 22833128.6
(22) Date of filing: 27.06.2022
(51) Int. Cl.: A01K 75/00, D01F 6/62, D01F 6/92, A01K 79/00

(54) **MARINE MATERIAL AND PRODUCTION METHOD THEREFOR**

(30) Priority: 29.06.2021 JP 2021107271
(71) Applicant: Nichimo Co., Ltd, Tokyo 140-0002 (JP)
(72) Inventor: KUMAZAWA Taisei, Tokyo 140-0002 (JP); ITO Sho, Tokyo 140-0002 (JP); KAIDA Akihiro, Tokyo 140-0002 (JP)
(74) Representative: Cabinet Beau de Loménie
(86) International application number: PCT/JP2022/025632
(87) International publication number: WO 2023/276981

(57) **Abstract**

[Problem] The present invention makes it possible to maintain the original function of a marine material when used in the state of being submerged in seawater or freshwater and also when stored or stocked in air before use, and also prevent marine pollution after use.

[Solution] A constituent element of the marine material, which is used in the state of being at least partially submerged in seawater or freshwater, is made of a resin containing polylactic acid (PLA) and polybutylene adipate terephthalate (PBAT). As a result, when the constituent element is used in the state of being at least partially submerged in seawater or freshwater, and also when stored or stocked in air before use, hydrolysis in the constituent element is suppressed, while when it has landed on the seabed or riverbed after use, hydrolysis is promoted.

## Description

### [Technical Field]

The present invention relates to a marine material used for the purpose of catching/culturing aquatic organisms in seawater or freshwater or maintaining the function of a structure placed in seawater or freshwater, and also to a method for producing the same.

### [Background Art]

"Marine materials" used in the fishing and aquaculture industries, such as fishing nets, ropes, squid hook covers, floats, oyster farming pipes, octopus pots, conger eel tubes, and sandbags, are generally produced from polyamide-based, polyester-based, polyethylene-based, or like fossil-derived plastics, which are inexpensive and have high strength. These marine materials are used in the state of being partially or completely submerged in seawater or freshwater. Thus, as such marine materials flow away due to disasters, rough weather, breakage, etc., or are intentionally dumped, they are becoming a cause of marine pollution, which is so-called "marine plastic waste" or simply referred to as "marine waste". In recent years, marine plastic waste has caused problems including so-called ghost fishing, where marine creatures such as whales and turtles get entangled in marine materials such as fishing lines, for example. At the same time, there are concerns that such plastics may turn into micro- or nano-plastics due to UV degradation, waves, etc., causing impacts on marine creatures that have accidentally eaten them and their ecosystems.

In addition, in fixed-bottom offshore wind power generation equipment, the foundation part of a tower supporting the rotating blade is installed on the seabed, and, in order to maintain the fixing function of the foundation part, a net-like bag body filled with stones or the like is used as a "marine material". Such a marine material used to maintain the function of a structure placed in seawater or freshwater similarly cannot pass over the problems of marine pollution.

As a measure against such marine pollution caused by "marine materials", for example, Patent Document 1 shown below proposes a fishing net including, as a constituent element, a resin member made of polylactic acid (PLA), polyglycolic acid (PGA), or the like. The fishing net of Patent Document 1 is formed from a polymeric resin that decomposes with moisture. According to Patent Document 1, when abandoned in water, the fishing net will turn into a monomer in about a few months to a year, and will eventually become food for microorganisms and disappear, so there will be no problem of environmental pollution caused by dumping or abandonment.

### [Citation List]

### [Patent Litereture]

**[PTL 1]**
Patent JP2855228B

### [Summary of Invention]

### [Technical Problem]

However, as a result of actually checking the degradability of polylactic acid (PLA) constituting the fishing net disclosed in Patent Document 1 described above, the amount of hydrolysis in water such as seawater is minute, and even in a soil or compost environment, a temperature of 80°C or more is a condition for hydrolysis (see, e.g., experimental data from the Institute of Advanced Industrial Science and Technology, etc.). That is, a marine material such as a fishing net, in which only polylactic acid (PLA) or polyglycolic acid (PGA) is the constituent element, hardly hydrolyzes not only during normal use in seawater but also in the case of being dumped or abandoned and landing on the seabed or riverbed, offering no measure against marine pollution.

Meanwhile, various biodegradable plastics that hydrolyze in both water and soil environments are known, and it is also possible to produce a marine material such as a fishing net using such a biodegradable plastic. However, when a marine material is formed from a commonly known biodegradable plastic, hydrolysis progresses during use in the state of being submerged in seawater or freshwater, causing the original function of the marine material to deteriorate or disappear at an early stage. In addition, there are also cases where in the storage or stock state before use, decomposition or performance deterioration occurs in air (e.g., PBS), and some materials cannot be commercialized from the viewpoint of quality assurance of marine materials in stock. Therefore, it is not possible to immediately adopt ordinary biodegradable plastics as constituent elements for marine materials.

Thus, an object of the present invention is to provide a marine material configured such that decomposition does not progress when it is used in the state of being submerged in seawater or freshwater and also when stored or stocked before use, making it possible to maintains its original function, and also biodegradation occurs after use, making it possible to prevent marine pollution; and also a method for producing the same.

### [Solution to Problem]

In order to achieve the above object, the present inventors have conducted experiments for biodegradability investigation regarding resins obtained by mixing various biodegradable plastics with polylactic acid (PLA) . As a result, they have arrived at the adoption of, like the marine material according to claim 1 of the present application, a marine material including a constituent element that is used in the state of being at least partially submerged in seawater or freshwater, configured such that the constituent element is made of a resin containing polylactic acid (PLA) and polybutylene adipate terephthalate (PBAT), and the weight ratio of polylactic acid (PLA) to polybutylene adipate terephthalate (PBAT) in the resin forming the constituent element is between 2:8 and 8:2.

In addition, similarly, in order to achieve the above object, the present inventors have arrived at, like the method for producing a marine material according to claim 4, a method for producing a marine material including a constituent element that is used in the state of being at least partially submerged in seawater or freshwater, in which the constituent element is formed from a resin containing polylactic acid (PLA) and polybutylene adipate terephthalate (PBAT), and the weight ratio of polylactic acid (PLA) to polybutylene adipate terephthalate (PBAT) in the resin forming the constituent element of the marine material is set to be between 2:8 and 8:2.

That is, it has been revealed that according to the marine material and method for producing the same configured as above, when the constituent element is used in the state of being at least partially submerged in seawater or freshwater, and also when stored or stocked in air before use, hydrolysis in the constituent element is suppressed to the extent that it hardly occurs, and the original function of the marine material is maintained without any hindrance, while when the marine material has landed on the seabed or riverbed due to being dumped or abandoned after use for a specific purpose, hydrolysis is promoted by bacteria living on the seabed or riverbed, etc., and marine pollution is effectively prevented.

Then, like the marine material according to claim 2, the marine material includes a fishing net, a net-like bag body, an oyster farming pipe, a rope, a twisted yarn, a squid hook cover, an octopus pot, a conger eel pipe, a sandbag, a float, and the like. In various marine materials including these exemplary materials, the actions and effects described above can be obtained.

### [Advantageous Effects of Invention]

As above, the marine material and method for producing the same according to the present invention are configured such that the constituent element that is used in the state of being at least partially submerged in seawater or freshwater is made of a resin containing polylactic acid (PLA) and polybutylene adipate terephthalate (PBAT) at between 2:8 and 8:2. As a result, when the constituent element is used in the state of being at least partially submerged in seawater or freshwater, and also when stored or stocked in air before use, hydrolysis in the constituent element is suppressed, while when it has landed on the seabed or riverbed due to being dumped or abandoned after use, hydrolysis is promoted from the part landing on the seabed or riverbed. Therefore, it is possible to maintain the original function of the marine material during use in the state of being submerged in seawater or freshwater, and also prevent marine pollution after use.

### [Brief Descriptions of the Drawings]

**[****Fig.1****]**

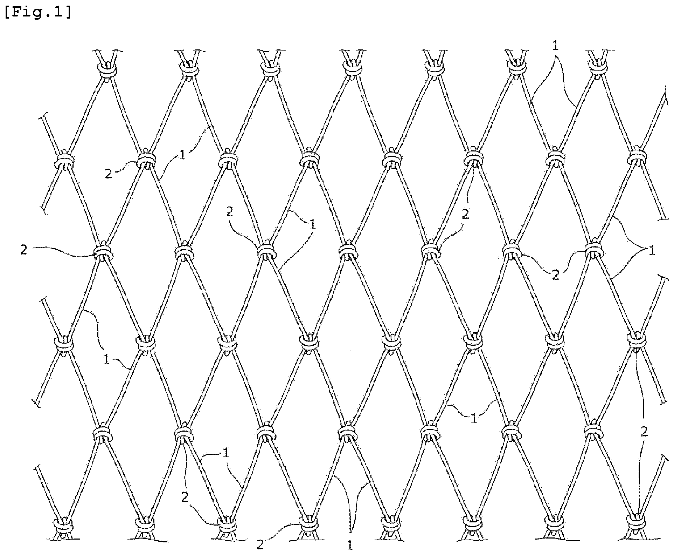

   Fig. 1 is a schematic front explanatory view showing the schematic configuration of a fishing net according to one embodiment of the present invention.
**[****Fig.2****]**

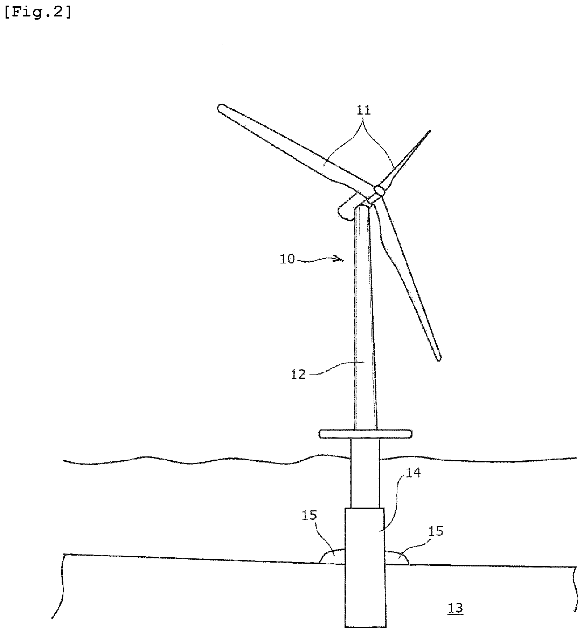

   Fig. 2 is a schematic cross-sectional explanatory view showing an example of fixed-bottom offshore wind power generation equipment according to another embodiment of the present invention.
**[****Fig.3****]**

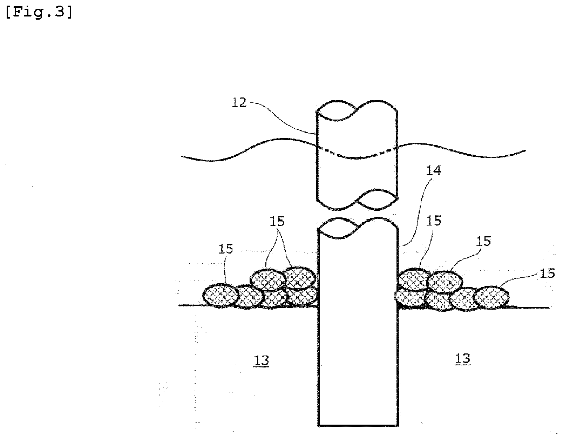

   Fig. 3 is a schematic cross-sectional enlarged explanatory view showing a part of the fixed-bottom offshore wind power generation equipment shown in Fig. 2 anchored to the seabed.
**[****Fig.4****]**

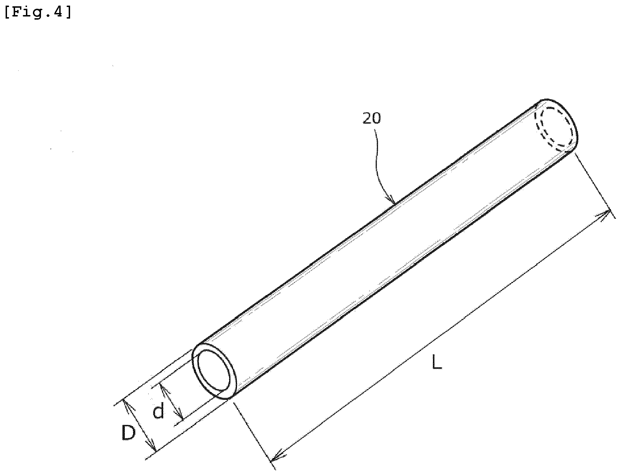

   Fig. 4 is an external perspective explanatory view showing an oyster farming pipe according to still another embodiment of the present invention.

### [Description of Embodiments]

Hereinafter, a marine material according to one embodiment of the present invention will be described in detail based on the drawings.

First, a fishing net as a marine material according to the first embodiment of the present invention shown in Fig. 1 includes, as a constituent element, a net fabric in which net yarns 1, 1, ..., each composed of a plurality of twisted yarns, are mutually crossed to form a network. At each intersection of the net yarns 1, a knot portion 2 is formed as a tied knot. Incidentally, there also is a fishing net referred to as "knotless net fabric" in which, instead of forming knot portions 2, knitted parts are formed to increase the strength.

As described above, the net yarn 1 as a "constituent element" in this embodiment is formed of a plurality of twisted yarns, and such a twisted yarn 1 is formed of a monofilament or multifilament substantially made of a resin containing polylactic acid (PLA: Poly Lactic Acid) and polybutylene adipate terephthalate (PBAT: Poly Butylene Adipate Terephthalate).

Here, "substantially" means that one or more of various additives such as end-capping agents, antioxidants, pigments, softeners, plasticizers, lubricants, antistatic agents, antifogging agents, colorants, antioxidizing agents (antiaging agents), heat stabilizers, light stabilizers, and UV absorbers and other resins, which are optionally used, may be contained.

Polylactic acid (PLA: Poly Lactic Acid) contained in the resin serving as a material for the net yarn 1 as a "constituent element" in this embodiment is obtained by, as is well known, adding lactic acid bacteria to starch or sugar (glucose) obtained from raw materials such as corn, potatoes, sugar cane, or sugar radish to make lactic acid (Lactic Acid), and then subjecting the resulting lactic acid to a dehydration treatment, followed by the ring-opening polymerization of lactide to cause plastic synthesis. Examples thereof are poly(L-lactic acid) whose structural unit is L-lactic acid, poly(D-lactic acid) whose structural unit is D-lactic acid, poly(LD-lactic acid) whose structural units are L-lactic acid and D-lactic acid, mixtures thereof, a random copolymer of L-lactic acid and D-lactic acid, a stereocomplex of L-lactic acid and D-lactic acid, and the like.

Meanwhile, polybutylene adipate terephthalate (PBAT: Poly Butylene Adipate Terephthalate) similarly contained in the resin serving as a material for the net yarn 1 is a petroleum-derived synthetic plastic, and is a thermoplastic polyester resin formed by the polycondensation of 1,4-butanediol (BDO), terephthalic acid (PTA), and adipic acid (AA) . Such a resin is known to have excellent decomposition performance as an aliphatic polyester together with excellent mechanical characteristics of an aromatic polyester.

In this way, the resin forming the net yarn 1 as a "constituent element" in this embodiment contains polylactic acid (PLA) and polybutylene adipate terephthalate (PBAT), and the weight ratio between the two is specified to be between 2:8 and 8:2 for the reasons described below. That is, relative to polylactic acid (PLA) contained in a weight ratio within a range of 2 to 8, polybutylene adipate terephthalate (PBAT) is contained in a weight ratio within a range of 8 to 2.

Then, as described below, it has turned out that when a resin contains polylactic acid (PLA) and polybutylene adipate terephthalate (PBAT) in a weight ratio of between 2: 8 and 8:2, after such a resin is used as a constituent element in the various "marine materials" described above, hydrolysis from the part landing on the seabed or riverbed is well promoted, offering a fairly effective measure against marine pollution. Meanwhile, as descried below, it has also been revealed that when the constituent element of a "marine material", which is made of the resin, is submerged in seawater or freshwater and used, and also when stored or stocked in air before use, hydrolysis is suppressed, and the original function of the marine material is maintained without any hindrance .

Next, in the fixed-bottom offshore wind power generation equipment 10 according to the second embodiment of the present invention shown in Fig. 2, a lower end portion of a tower 12, which supports a rotating blade 11 at its upper end portion, is held by a foundation part 14 installed on the seabed 13. Then, in the foundation part 14, for the purpose of preventing the occurrence of so-called "scouring", where earth and sand are washed away under the influence of waves and ocean currents, a large number of bag-shaped foot protection members 15, 15 ..., each formed of a net-like bag body filled with stones or the like, are stacked around the foundation part 14, particularly as shown in Fig. 3.

The bag-shaped foot protection member 15 described above serves as a constituent element of the "marine material" in this embodiment. Such a net-like bag body as a constituent element of the marine material, which constitutes the bag-shaped foot protection member 15 in the fixed-bottom offshore wind power generation equipment 10, is, similarly to the fishing net described above, formed of a net fabric in which net yarns, each composed of a plurality of twisted yarns, are mutually crossed to form a network. Then, the twisted yarn constituting the net fabric of the net-like bag body in this embodiment is formed of a monofilament or multifilament substantially made of a resin containing polylactic acid (PLA: Poly Lactic Acid) and polybutylene adipate terephthalate (PBAT: Poly Butylene Adipate Terephthalate).

These polylactic acid (PLA: Poly Lactic Acid) and polybutylene adipate terephthalate (PBAT: Poly Butylene Adipate Terephthalate) are the same as in the fishing net in the first embodiment described above, and thus the detailed description thereof will be omitted, but "substantially" means that one or more of various additives such as end-capping agents, antioxidants, pigments, softeners, plasticizers, lubricants, antistatic agents, antifogging agents, colorants, antioxidizing agents (antiaging agents), heat stabilizers, light stabilizers, and UV absorbers and other resins, which are optionally used, are contained.

Further, in the third embodiment of the present invention shown in Fig. 4, an oyster farming pipe 20, which is generally referred to as "oyster tube", is used as a constituent element of a "marine material". The oyster farming pipe 20 is made of a resin and used in oyster farming in order to ensure a certain distance when hanging scallops, to which seedlings are attached, from a raft. The oyster farming pipe 20 is formed of, for example, a pipe-shaped member having a length L of 24 cm, an outer diameter D of 1.43 cm, and an inner diameter d of 0.15 cm.

The oyster farming pipe (oyster tube) 20 as a "constituent element" of the marine material described above is substantially made of a resin containing polylactic acid (PLA: Poly Lactic Acid) and polybutylene adipate terephthalate (PBAT: Poly Butylene Adipate Terephthalate), and "substantially" herein means that one or more of various additives such as end-capping agents, antioxidants, pigments, softeners, plasticizers, lubricants, antistatic agents, antifogging agents, colorants, antioxidizing agents (antiaging agents), heat stabilizers, light stabilizers, and UV absorbers and other resins, which are optionally used, are contained. Polylactic acid (PLA: Poly Lactic Acid) and polybutylene adipate terephthalate (PBAT: Poly Butylene Adipate Terephthalate) are the same as in the embodiments described above, and thus the detailed description thereof will be omitted.

In order to check the biodegradability of the resin forming a "constituent element" of the marine material according to each of these embodiments, that is, the resin containing polylactic acid (PLA: Poly Lactic Acid) and polybutylene adipate terephthalate (PBAT: Poly Butylene Adipate Terephthalate), experiments regarding biodegradability were performed for each of the examples, which will be described later, using the oyster farming pipe (oyster tube) 20 according to the third embodiment described above and its substitutes. As a result, as shown in the scatter diagram of the following [Table 1], it turned out that there was a certain correlation between the percentage weight decrease of the test object in a seawater mud environment (vertical axis) and the weight ratio between the two resins (horizontal axis).

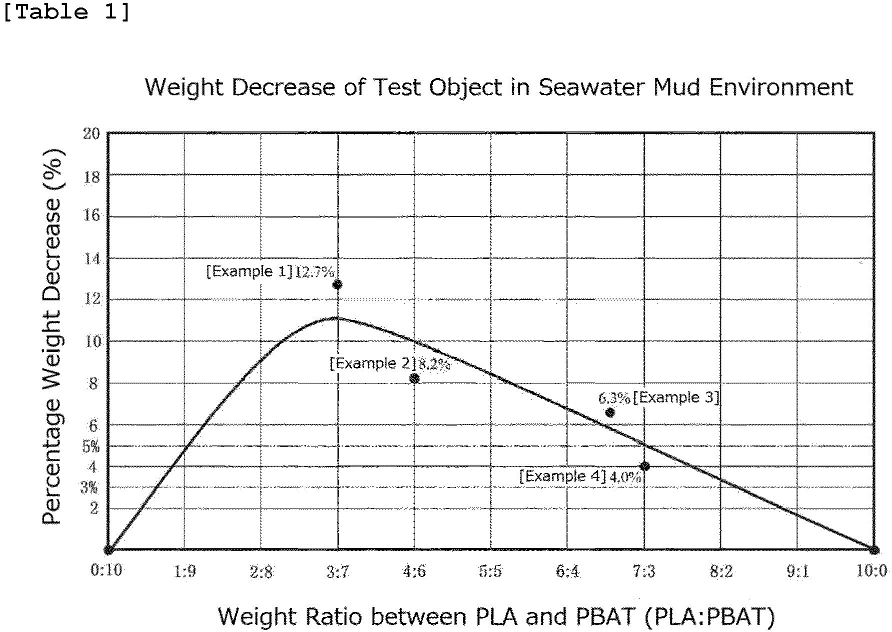

Incidentally, according to the results shown in the above [Table 1], regarding a resin containing only polylactic acid (PLA) and no polybutylene adipate terephthalate (PBAT) (weight ratio: 10:0) and also a resin containing only polybutylene adipate terephthalate (PBAT) and no polylactic acid (PLA) (weight ratio: 0:10), from the description of the following prior published documents (1) and (2), it was judged that no biodegradability was observed.
(1) "Seikei-Kakou, Vol. 32, No. 11, 2020" published by "Japan Society of Polymer Processing", Table 1 on page 378, tables on page 379, etc.
(2) "Purasutikku no Kaiyo-Seibunkaisei no Hyoka (Evaluation of Marine Biodegradability of Plastics)" published as "Summary of 25th (2020) Research presentation by Chemicals Evaluation and Research Institute, Japan", Fig. 7, etc.

Hereinafter, each example shown in [Table 1] will be described.

### [Example 1]

[Example 1] of the above [Table 1] is an example where in an oyster farming pipe (oyster tube) as a marine material according to the third embodiment described above, the weight ratio of polylactic acid (PLA) to polybutylene adipate terephthalate (PBAT) in the resin forming its constituent element was set to be "3:7". More specifically, a raw material obtained by mixing 0.3 Kg of polylactic acid (PLA: manufactured by Hisun Co., Ltd., registered trademark name: REVODE), 0.7 Kg of polybutylene adipate terephthalate (PBAT: manufactured by Tonhe Co., Ltd., registered trademark name: TH801T), and 0.02 kg of an end-capping agent, and then melt-kneading the mixture using a twin-screw kneader, followed by pelletizing, was injection-molded to produce an oyster farming pipe (oyster tube) according to the third embodiment described above, giving a marine material test object according to [Example 1].

The oyster farming pipe (oyster tube) thus produced as a test object according to [Example 1] was placed in air, in seawater, and also on seawater mud, and the change in weight of each oyster farming pipe over time was measured. The results as shown in the following [Table 2] were obtained.

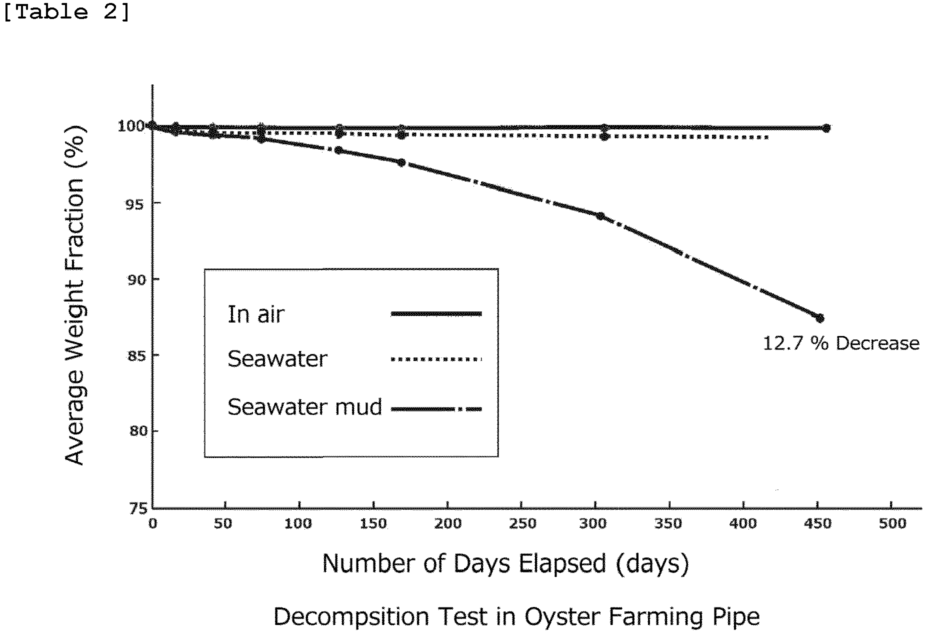

As shown in the above [Table 2], the following has been found. In the oyster farming pipe (oyster tube) according to [Example 1] where the weight ratio of polylactic acid (PLA) to polybutylene adipate terephthalate (PBAT) was set to be "3:7", first, when it was in air or submerged in seawater, that is, in the environment of oyster farming pipe (oyster tube) usage and also in the environment of being stored or stocked in air before use, hydrolysis hardly progressed, and the original function as an oyster farming pipe (oyster tube) was maintained without any hindrance.

Meanwhile, in the case where the oyster farming pipe (oyster tube) according to [Example 1] was in contact with seawater mud, as in the case of landing on the seabed due to being dumped or abandoned after use, the hydrolysis of the oyster farming pipe (oyster tube) progressed from the surface part especially after the elapse of 200 days, and the weight of the oyster farming pipe (oyster tube) at the elapse of 450 days decreased by 12.7% in the seawater mud environment.

Here, in order to achieve an effective measure against marine pollution to deal with so-called ghost fishing and the like, as described below, a percentage decrease of about 3% is believed necessary. That is, for example, considering that it is generally said that it takes about 600 years for marine materials, such as fishing lines made of nylon, to be decomposed (U.S. National Park Service; Mote Marine Lab, Sarasota, FL and "Garbage In, Garbage Out", Audubon magazine, Sept/Oct 1998., etc.), setting the target value such that the weight decreases by half after 20 years from dumping or abandonment is believed to be an appropriate measure against marine pollution. Then, in that case, the percentage weight decrease at the elapse of 450 days from dumping or abandonment will be approximately 3%. Thus, the oyster farming pipe (oyster tube) according to [Example 1] having a percentage weight decrease of 12.7%, which is significantly higher than the 3% target value, is an extremely effective measure against marine pollution.

The present inventors have conducted a detailed analysis on the process of such biodegradation in a seawater mud environment, and found that hydrolysis is promoted by enzymes, such as esterases, secreted by four types of bacteria living near the seabed and also in mud, sand, and the like in the sea.

Incidentally, the possibility that the decrease in weight of the test object measured was not due to "biodegradation" but due to the peeling of the pipe surface, etc., was also verified. Specifically, if the decrease in weight of the oyster farming pipe (oyster tube) used as a test object was due to the peeling of the pipe surface, the surface texture after the weight decrease should be the same as the surface texture in air or before the test. Thus, before and after the decomposition test, the molecular structure of the surface was analyzed by infrared spectroscopy (FT-IR). As a result, it was observed that in the molecular structure of the pipe surface, the number of hydroxyl groups (-OH groups) was higher after the decomposition test. This shows that on the pipe surface, peeling did not occur, but the hydrolysis of polylactic acid (ester bond cleavage reaction) occurred.

Meanwhile, the weight average molecular weight of the oyster farming pipe (oyster tube) used as a test object was measured by gel permeation chromatography (GPC). As a result, it was observed that there was no change before and after the test, and the number average molecular weight increased. This is consistent with features of enzymatic decomposition, in which weight loss occurs before a significant change in molecular weight distribution, showing that the pipe surface was hydrolyzed by enzymes secreted by microorganisms. These verification results have made it clear that the weight decrease observed in the decomposition test was due to biodegradation.

### [Example 2]

[Example 2] in the above [Table 1] is an example where in an oyster farming pipe (oyster tube) as a marine material according to the third embodiment described above, the weight ratio of polylactic acid (PLA) to polybutylene adipate terephthalate (PBAT) contained in the resin forming its constituent element was set to be "4: 6". More specifically, a raw material obtained by mixing 0.4 Kg of polylactic acid (PLA: manufactured by Hisun Co., Ltd., registered trademark name: REVODE), 0.6 Kg of polybutylene adipate terephthalate (PBAT: manufactured by Tonhe Co., Ltd., registered trademark name: TH801T), and 0.02 kg of an end-capping agent, and then melt-kneading the mixture using a twin-screw kneader, followed by pelletizing, was injection-molded to produce an oyster farming pipe (oyster tube) according to the third embodiment described above, giving a marine material test object according to [Example 2].

The oyster farming pipe (oyster tube) thus produced as a test object according to [Example 2] was placed in air, in seawater, and also on seawater mud, and the change in weight of each oyster farming pipe over time was measured. The results as shown in the following [Table 3] were obtained.

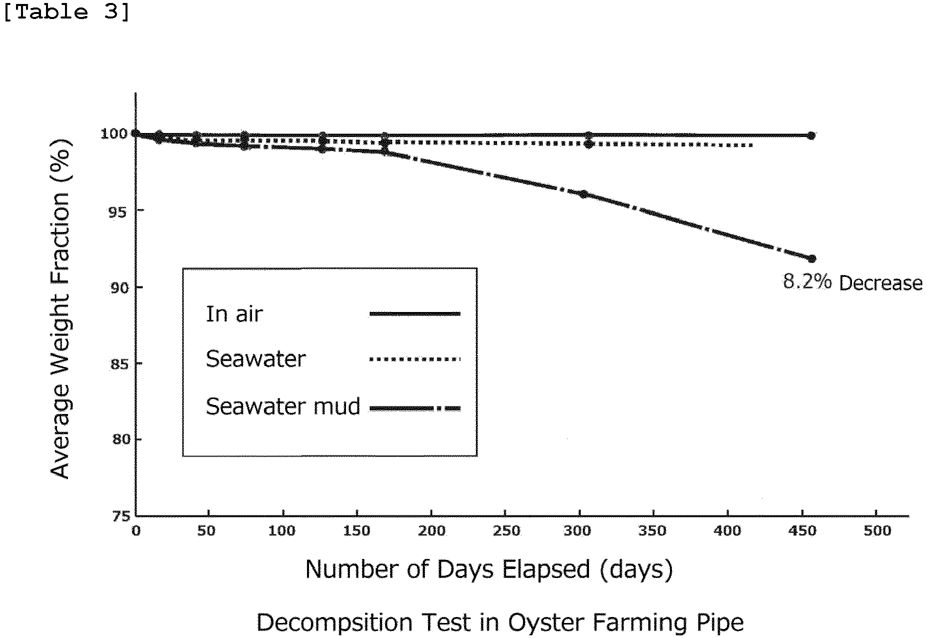

As shown in [Table 3], the following has been found. In the oyster farming pipe (oyster tube) according to [Example 2] where the weight ratio of polylactic acid (PLA) to polybutylene adipate terephthalate (PBAT) was set to be "4:6", first, when it was in air or submerged in seawater, that is, in the environment of oyster farming pipe (oyster tube) usage and also in the environment of being stored or stocked in air before use, hydrolysis hardly progressed as in [Example 1] described above, and the original function as an oyster farming pipe (oyster tube) was maintained without any hindrance.

Meanwhile, in the case where the oyster farming pipe (oyster tube) according to [Example 2] was in contact with seawater mud, as in the case of landing on the seabed due to being dumped or abandoned after use, the hydrolysis of the oyster farming pipe (oyster tube) progressed from the surface part especially after the elapse of 200 days, but the amount of hydrolysis slightly decreased, and the weight of the oyster farming pipe at the elapse of 450 days decreased by 8.2% in the seawater mud environment. As described above in [Example 1], considering that a percentage decrease of about 3% is necessary for an effective measure against marine pollution, the oyster farming pipe (oyster tube) according to [Example 2] also serves as a fairly effective measure against marine pollution.

As in [Example 1] described above, it was verified that in the process of such biodegradation in a seawater mud environment, hydrolysis was promoted by four types of bacteria living near the seabed and also in mud, sand, and the like in the sea, and also that the decrease in weight of the test object measured was not due to the peeling of the pipe surface, etc.

### [Example 3]

Next, [Example 3] in the above [Table 1] is an example where, for the purpose of easily producing a test object different in composition from those in Examples 1 and 2 described above, and also allowing the weight decrease measurement to be easily and quickly performed, a tape-shaped member was adopted as a substitute for the oyster farming pipe (oyster tube) according to the third embodiment described above. Then, the tape-shaped member as a substitute test object has a shape in which the oyster farming pipe (oyster tube) of the third embodiment is projected in a direction perpendicular to the central axis or expanded around the axis, and thus is believed to give equivalent results corresponding to Examples 1 and 2 described above at least with respect to the weight decrease due to biodegradation.

More specifically, the weight ratio of polylactic acid (PLA) to polybutylene adipate terephthalate (PBAT) in the resin forming a constituent element of the tape-shaped member was set to be "6.5:3.5", and a raw material obtained by mixing 0.65 Kg of polylactic acid (PLA: manufactured by Hisun Co., Ltd., registered trademark name: REVODE), 0.35 Kg of polybutylene adipate terephthalate (PBAT: manufactured by Tonhe Co., Ltd., registered trademark name: TH801T), and 0.02 kg of an end-capping agent, and then melt-kneading the mixture using a twin-screw kneader, followed by pelletizing, was injection-molded, formed into a film through a multi-roll unit and a stretch molding machine, and then slit, thereby giving the tape-shaped member described above as a substitute for a test object of the oyster farming pipe (oyster tube) according to the third embodiment. That is, the resin having the composition according to this Example 3 (6.5:3.5) has such properties that various kinds of processing are difficult, and it is particularly difficult to form such a resin into a tubular shape like an oyster farming pipe. Thus, in this Example 3, a tape-shaped member that is believed to be equivalent to the oyster farming pipe described above in the evaluation of biodegradation was employed as a test object.

The tape-shaped member thus produced as a test object according to [Example 3] was placed in air, in seawater, and also on seawater mud, and the change in weight of each tape-shaped member over time was measured. The results are shown in the following [Table 4] .

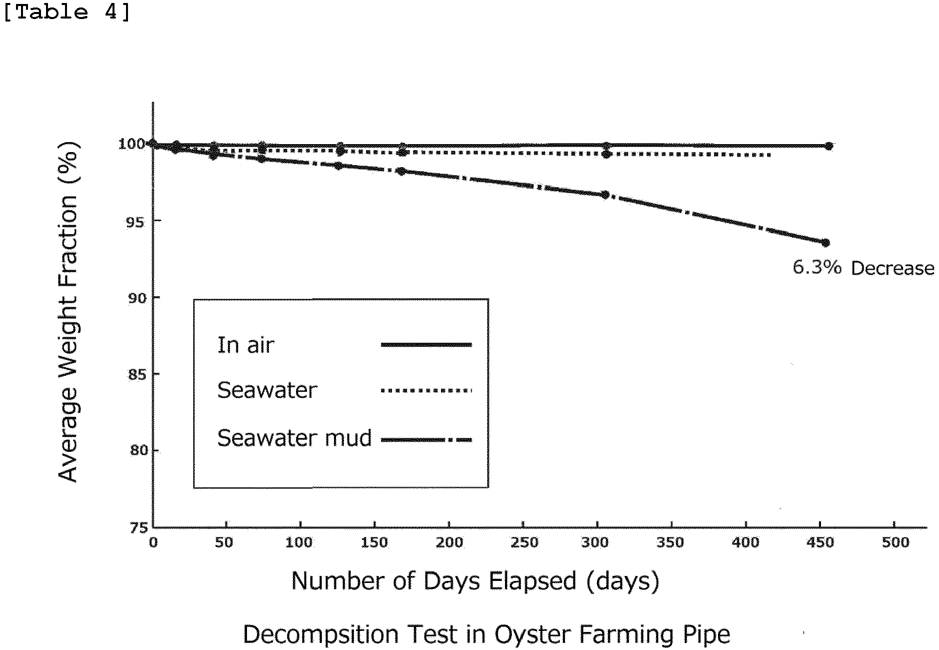

As shown in [Table 4], with respect to the tape-shaped member according to [Example 3] where the weight ratio of polylactic acid (PLA) to polybutylene adipate terephthalate (PBAT) was set to be "6.5 to 3.5", when it is in air or submerged in seawater, that is, in the environment of marine material usage and also in the environment of being stored or stocked in air before use, hydrolysis hardly progresses as in the above examples, and the original function as a marine material is maintained without any hindrance.

Meanwhile, in the case where the tape-shaped member according to [Example 3] was in contact with seawater mud, as in the case of landing on the seabed due to being dumped or abandoned after use, hydrolysis tended to gradually progress after the elapse of 200 days . The amount of hydrolysis at that time decreased to about half that of [Example 1] described above, but the weight of the tape-shaped member at the elapse of 450 days decreased by 6.3% in the seawater mud environment. As described above in [Example 1] , considering that a percentage decrease of about 3% is necessary for an effective measure against marine pollution, the oyster farming pipe (oyster tube) replaced by the tape-shaped member according to [Example 3] is also judged to be an effective measure against marine pollution to some extent.

Incidentally, as in the above examples, it was also verified that the weight decrease observed in the decomposition test was not due to the peeling of the pipe surface, etc., but due to biodegradation.

### [Example 4]

Similarly to [Example 3] described above, [Example 4] in the above [Table 1] also adopts a test object formed of a tape-shaped member having the same shape as in [Example 3] for the purpose of easily and quickly measuring the decrease in weight of the test object placed on seawater mud, and, similarly to [Example 3], such a test object can also be believed to serve as a substitute test object for the oyster farming pipe (oyster tube) according to the third embodiment described above.

More specifically, the weight ratio of polylactic acid (PLA) to polybutylene adipate terephthalate (PBAT) in the resin forming a constituent element of the tape-shaped member was set to be "7:3", and a raw material obtained by mixing 0.7 Kg of polylactic acid (PLA: manufactured by Hisun Co., Ltd., registered trademark name: REVODE), 0.3 Kg of polybutylene adipate terephthalate (PBAT: manufactured by Tonhe Co., Ltd., registered trademark name: TH801T), and 0.02 kg of an end-capping agent, and then melt-kneading the mixture using a twin-screw kneader, followed by pelletizing, was injection-molded, formed into a film through a multi-roll unit and a stretch molding machine, and then slit, thereby giving the tape-shaped member described above as a substitute for a test object of the oyster farming pipe (oyster tube) according to the third embodiment. That is, as in Example 3 described above, the resin having the composition according to this Example 4 (7:3) also has such properties that processing is difficult, and it is particularly difficult to form such a resin into a tubular shape like an oyster farming pipe. Therefore, also in this Example 4, a tape-shaped member, which is believed to be equivalent to an oyster farming pipe in the evaluation of biodegradation, was employed as a test object.

The tape-shaped member thus produced as a test object according to [Example 4] was placed in air, in seawater, and also on seawater mud, and the change in weight of each tape-shaped member over time was measured. The results are shown in the following [Table 5].

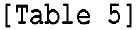

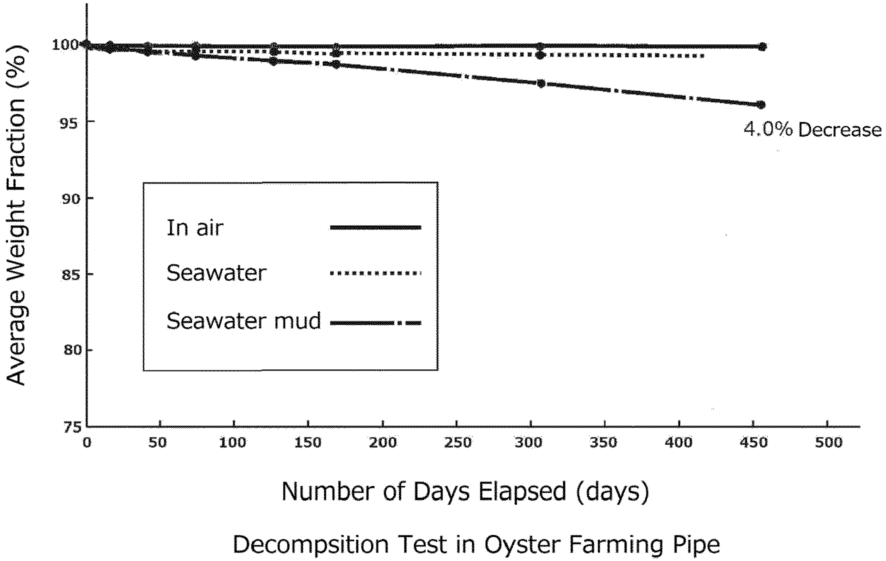

As shown in [Table 5], with respect to the tape-shaped member according to [Example 4] where the weight ratio of polylactic acid (PLA) to polybutylene adipate terephthalate (PBAT) was set to be "7:3", when it is in air or submerged in seawater, that is, in the environment of marine material usage and also in the environment of being stored or stocked in air before use, hydrolysis hardly progresses as in the above examples, and the original function as a marine material is maintained without any hindrance.

Meanwhile, in the case where the tape-shaped member according to [Example 4] was in contact with seawater mud, as in the case of landing on the seabed due to being dumped or abandoned after use, hydrolysis tended to slightly progress after the elapse of 200 days. The amount of hydrolysis at that time decreased to about 1/3 compared to [Example 1] described above. Although the weight of the tape-shaped member at the elapse of 450 days decreased by only 4.0% in seawater mud, as described above in [Example 1], because a percentage decrease of about 3% is believed to be sufficient for an effective measure against marine pollution, the oyster farming pipe (oyster tube) replaced by the tape-shaped member according to [Example 4] is also believed to be a measure against marine pollution to some extent.

As above, according to the present invention, when a constituent element of a marine material is submerged in seawater or freshwater and used, or when stored or stocked in air before use, the hydrolysis of the constituent element is suppressed. Meanwhile, from [Table 1] described above, by suitably setting the weight ratio of polylactic acid (PLA) to polybutylene adipate terephthalate (PBAT) in the resin forming the constituent element, hydrolysis from the part landing on the seabed or riverbed due to dumping or abandonment after use for a specific purpose, such as aquaculture or fish catching, is well promoted, offering a fairly effective measure against marine pollution.

That is, considering that most of marine materials dumped or abandoned after use will land on seawater mud, it is believed that the percentage weight decrease at the elapse of 450 days from contact with seawater mud needs to be 3% or more. Therefore, as is clear from [Table 1] described above, a marine material with the weight ratio of polylactic acid (PLA) to polybutylene adipate terephthalate (PBAT) set to be between "2:8 and 8:2" can be an effective measure against marine pollution.

Meanwhile, as a still more effective measure against marine pollution, in the case where the percentage weight decrease at the elapse of 450 days from contact with seawater mud needs to be 5% or more, setting the weight ratio of polylactic acid (PLA) to polybutylene adipate terephthalate (PBAT) to be between "2:8 and 7:3" offers an effective measure against marine pollution. In addition, also in the case where the percentage weight decrease necessary for a measure against marine pollution is set to be a different value, the weight ratio of polylactic acid (PLA) to polybutylene adipate terephthalate (PBAT) can be suitably determined based on the correlation shown above in [Table 1].

Incidentally, it has been confirmed that the decomposition characteristics of the resin according to the present invention are the same in fishing nets, ropes, sandbags, and float covers, which are marine materials whose constituent elements are used in the state of partially being submerged in seawater or freshwater.

As above, the remarkable actions and effects of the present invention can only be obtained when a resin containing polylactic acid (PLA) and polybutylene adipate terephthalate (PBAT) is used as a constituent element of a marine material, and cannot be predicted from the decomposition characteristics in the case where polylactic acid (PLA) or polybutylene adipate terephthalate (PBAT) is used alone. That is, they clearly have unpredictability.

Incidentally, the resin forming a constituent element of the marine material according to the present invention does not exclude cases where impurities that are inevitably formed in the raw materials or during the production process, etc., are contained. In addition, the present invention is, of course, not limited to the embodiments and examples described above, but can be applied with suitable modifications as necessary.

### [Industrial applicability]

As above, the preset invention can be widely applied to a wide variety of marine materials, such as fishing nets, net-like bag bodies, oyster farming pipes, ropes, twisted yarns, squid hook covers, octopus pots, conger eel pipes, sandbags, and floats.

### [Reference Signal List]

- 1:: Net yarn
- 2:: Knot portion
- 10:: Offshore wind power generation equipment
- 11:: Rotating blade
- 12:: Tower
- 13:: Seabed
- 14:: Foundation part
- 15:: Bag-shaped foot protection member

## Claims

1. A marine material comprising a constituent element that is used in the state of being at least partially submerged in seawater or freshwater,
the marine material being **characterized in that**:
the constituent element is made of a resin containing polylactic acid (PLA) and polybutylene adipate terephthalate (PBAT); and
the weight ratio of polylactic acid (PLA) to polybutylene adipate terephthalate (PBAT) in the resin forming the constituent element is between 2:8 and 8:2.

2. A marine material **characterized in that** the marine material according to claim 1 includes a fishing net, a net-like bag body, an oyster farming pipe, a rope, a twisted yarn, a squid hook cover, an octopus pot, a conger eel pipe, a sandbag, and a float.

3. A method for producing a marine material including a constituent element that is used in the state of being at least partially submerged in seawater or freshwater,
the method for producing a marine material being **characterized in that**:
the constituent element is formed from a resin containing polylactic acid (PLA) and polybutylene adipate terephthalate (PBAT); and
the weight ratio of polylactic acid (PLA) to polybutylene adipate terephthalate (PBAT) in the resin forming the constituent element of the marine material is set to be between 2:8 and 8:2.
